# EUROPÄISCHE PATENTSCHRIFT

(11) **EP 3 207 166 B1**
(45) Veröffentlichungstag und Bekanntmachung des Hinweises auf die Patenterteilung: **23.10.2019**
(21) Anmeldenummer: 15763366.0
(22) Anmeldetag: 17.09.2015
(51) Int. Cl.: C22C 21/00, B32B 15/01, C22C 21/12, C22C 21/14, C22C 21/16, C22C 21/18, F16C 33/12

(54) **GLEITLAGERVERBUNDWERKSTOFF MIT ALUMINIUM-LAGERMETALLSCHICHT**
COMPOSITE MATERIAL FOR A SLIDING BEARING COMPRISING AN ALUMINUM BEARING METAL LAYER
MATÉRIAU COMPOSITE POUR PALIER LISSE PRÉSENTANT UNE COUCHE DE MÉTAL ANTIFRICTION À BASE D'ALUMINIUM, PLAQUÉE À CHAUD

(30) Priorität: 14.10.2014 DE 102014220788
(43) Veröffentlichungstag der Anmeldung: 23.08.2017
(73) Patentinhaber: Federal-Mogul Wiesbaden GmbH, 65201 Wiesbaden (DE)
(72) Erfinder: LINDNER, Karl-Heinz, 45481 Mülheim (DE)
(74) Vertreter: Mehler Achler
(86) Internationale Anmeldenummer: PCT/EP2015/071328
(87) Internationale Veröffentlichungsnummer: WO 2016/058780

(56) Entgegenhaltungen:
- DE-A1-102005 023 541
- DE-B3-102009 002 700
- "INTERNATIONAL ALLOY DESIGNATIONS AND CHEMICAL COMPOSITION LIMITSFOR WROUGHT ALUMINUM AND WROUGHT ALUMINUM ALLOYS", INTERNATIONAL ALLOY DESIGNATIONS AND CHEMICAL COMPOSITION LIMITSFOR WROUGHT ALUMINUM AND WROUGHT ALUMINUM ALLOYS, XX, XX, 1. April 2004 (2004-04-01), Seiten 1-35, XP003023672,

## Beschreibung

Die Erfindung betrifft einen Gleitlagerverbundwerkstoff mit einer Stützschicht aus Stahl, einer Zwischenschicht auf Basis einer bis auf Verunreinigungen bleifreien Aluminiumlegierung und einer Lagermetallschicht auf Basis einer bis auf Verunreinigung bleifreien Aluminiumlegierung mit Zinn, Nickel, Mangan und Kupfer als Hauptlegierungselemente.

Eine solcher Gleitlagerverbundwerkstoff wird beispielsweise in den Schriften DE 10 2005 023 541 A1 und DE 10 2009 002 700 B3 beschrieben. Gegenstand der erstgenannten Schrift ist ein Gleitlagerverbundwerkstoff mit einer metallischen Stützschicht und einer Lagermetallschicht der vorstehend genannten Art, welche mittels einer Zwischenschicht auf Aluminiumbasis auf der metallischen Stützschicht aufgebracht ist. Die Besonderheit hierbei ist, dass die Aluminiumlegierungen der Zwischenschicht und der Lagermetallschicht bis auf einen zusätzlichen Weichphasenanteil in der Lagermetallschicht übereinstimmen. Als Weichphasenanteil in der Lagermetallschicht werden 5 - 20 Gew.-% Zinn und besonders bevorzugt 9 - 11 Gew.-% Zinn vorgesehen. Die übrigen Legierungsbestandteile der Zwischenschicht und der Lagermetallschicht sind 1,0 - 3,0 Gew.-% Nickel, 0,5 - 2,5 Gew.-% Mangan, 0,02 - 1,5 Gew.-% Kupfer und Rest Aluminium.

Die vorstehend zweitgenannte Schrift hat ebenfalls ein Gleitlagerelement mit einer Stützschicht, einer Zwischenschicht und einer Lagermetallschicht auf Basis einer Aluminiumlegierung zum Gegenstand. Die Besonderheit der Zwischenschicht ist in diesem Fall eine Aluminiumlegierung mit 3,5 - 4,5 Gew.-% Kupfer, 0,1 - 1,5 Gew.-% Mangan und 0,1 - 1,5 Gew.-% Magnesium, wobei die Zwischenschicht auf eine Mikrohärte von 70 HV 0,01 - 110 HV 0,01 eingestellt wird. Die Lagermetallschicht des Gleitlagerelementes weist eine Zusammensetzung von 1,0 - 3 Gew.-% Nickel, 0,5 bis 2,5 Gew.-% Mangan, 0,02 - 1,5 Gew.-% Kupfer und einen Weichphasenanteil von 5 - 20 Gew.-% und im Übrigen Aluminium auf. Als Weichphase wird wiederum Zinn in einem Anteil von 8 - 12 Gew.-% bevorzugt. Das Gleitelement erlangt durch eine Kombination einer relativ dicken und relativ harten Zwischenschicht einerseits und der dazu passenden Lagermetallschicht andererseits eine hinreichend plastische Nachgiebigkeit und Formanpassungsfähigkeit. Gleichzeitig tritt hierbei aber nicht das entdeckte Problem eines Herausquetschens des Zwischenschichtmaterials bei hoher Spitzenbelastung aufgrund zu großer Duktilität auf.

Der gattungsgemäße Gleitlagerverbundwerkstoff ist beispielsweise auch aus der Schrift DE 10 2004 025 557 A1 bekannt. Auch diese Schrift befasst sich mit der Modifikation der aluminiumbasierten Zwischenschicht, die die Besonderheit aufweist, das sie aus wenigstens zwei Lagen aufgebaut ist, von denen die untere, der Stützschicht aus Stahl zugewandte Lage eine geringere Härte aufweist als die obere, der aluminiumbasierten Lagermetallschicht zugewandte Lage. Die Zusammensetzung der Lagermetallschicht wird mit einem Weichphasenanteil von 3 bis 20 Gew.-% Zinn, desweiteren mit 0,1 bis 7 Gew.-% eines oder mehrerer der Elemente Cu, Zn, Mg und Si, 0,01 bis 3 Gew.-% eines oder mehrerer der Elemente Mn, V, Mo, Cr, Co, Fe, Ni und W, 0,01 bis 2 Gew.-% eines oder mehrerer der Elemente B, Ti und Zr und 3 oder weniger Gew.-% eines oder mehrerer der Elemente Pb, Bi und In angegeben. Die Zusammensetzung der aluminiumbasierten Zwischenschicht enthält neben Aluminium 1 bis 8,5 Gew.-% Si, 0,01 bis 7 Gew.-% eines oder mehrerer der Elemente Cu, Zn und Mg, 0,01 bis 3 Gew.-% eines oder mehrerer der Elemente Mn, V, Mo, Cr, Co, Fe, Ni und W sowie 0,01 bis 2 Gew.-% eines oder mehrerer der Elemente B, Ti und Zr und im übrigen Aluminium angegeben.

Die Schrift US 2002/0192105 A1 befasst sich mit einer Aluminiumlegierung für Gleitlager auf Aluminium-Zinn-Basis. Die Legierung weist 2 bis 20 Gew.-% Zinn, 3 Gew.-% oder weniger Kupfer, 0,3 bis 5 Gew.-% TiC-Partikel und im Übrigen Aluminium auf. Aus der Schrift ist ferner eine Harz-basierte Beschichtung mit MoSi₂-Festschmierstoff zur Verringerung der Fressneigung in der Einlaufphase des Lagers bekannt.

Zur Fixierung der Lagermetallschicht auf der Stahlstützschicht muss zum einen die Zwischenschicht auf die Lagermetallschicht und zum anderen der Verbund aus Lagermetall und Zwischenschicht auf die Stahlstützschicht aufplattiert werden. Anschließend muss der Schichtverbund noch einer Wärmebehandlung unterzogen werden, bei der durch eine Abschlussglühung die gewünschte Gefügestruktur und damit die gewünschten Materialeigenschaften eingestellt werden.

Auch die Verschleißbeständigkeit ist für die in Start-Stopp-Anwendungen vorherrschenden Mischreibungsbedingungen nach wie vor ein bedeutender Faktor, so dass hier stets Optimierungsbedarf besteht. Ferner haben es sich die Erfinder aber zur Aufgabe gemacht, gleichzeitig die Ermüdungsfestigkeit des Lagermaterials zu erhöhen.

Die Aufgabe wird erfindungsgemäß durch einen Gleitlagerverbundwerkstoff mit den Merkmalen des Patentanspruchs 1 gelöst.

Demnach sieht die Erfindung einen Gleitlagerverbundwerkstoff mit einer Stützschicht aus Stahl, einer Zwischenschicht auf Basis einer bis auf Verunreinigung bleifreien Aluminiumlegierung und einer vorzugsweise mittels Kaltwalzplattieren direkt auf die Stützschicht aufgebrachten Lagermetallschicht auf Basis einer bis auf Verunreinigung bleifreien Aluminiumlegierung vor. Die Aluminiumlegierung der Zwischenschicht weist eine Zusammensetzung mit 3,5 bis 4,5 Gew.-% Kupfer, 0,1 bis 1,5 Gew.-% Mangan, 0,1 bis 1,5 Gew.-% Magnesium, wahlweise in der Summe 0,05 % bis 0,25 % Zirconium und Titan, wahlweise im Einzelnen nicht mehr als 0,1 Gew.-% und in der Summe nicht mehr als 0,25 Gew.-% anderen Legierungsbestandteilen, den üblichen zulässigen Verunreinigungen und Rest Aluminium auf. Die Aluminiumlegierung der Lagermetallschicht weist eine Zusammensetzung mit 6,0 - 8,0 Gew.-% Zinn, 1,0 - 3,0 Gew.-% Nickel, 0,5 - 1,0 Gew.-% Mangan, 0,5 - 1,0 -Gew.% Kupfer, 0,15 - 0,25 Gew.-% Chrom, 0,1 - 0,3 Gew.-% Vanadium, wahlweise 0,1 - 0,2 Gew.-% Zirconium, wahlweise bis 0,2 Gew.-% Titan, wahlweise weniger als 0,5 Gew.-% sonstiger Elemente den üblichen zulässigen Verunreinigungen und Rest Aluminium auf.

Als "bis auf Verunreinigungen bleifrei" wird im Sinne dieser Schrift verstanden, dass ein Bleianteil, der gegebenenfalls durch Verunreinigung einzelner Legierungselemente vorhanden sein könnte, jedenfalls geringer ist als 0,1 Gew.-%.

Das Lagermetall wird in Streifenform kontinuierlich auf einem sogenannter Belt-Caster gegossen, anschließend angelassen und dann mit dem Zwischenschichtmaterial, welches in Folienform vorliegt, plattiert. Der Verbund wird anschließend gewalzt und schließlich in einem Kaltwalzplattierschritt mit der Seite der Zwischenschicht auf den Stahl aufgebracht. Als Kaltwalzplattieren wird ein Walzplattierverfahren bei Plattiertemperaturen < 300°C bezeichnet. Aus diesem Herstellungsverfahren resultiert ein Gleitlagerverbundwerkstoff mit einem hochfesten, fressunempfindlichen und ermüdungsfesten Lagermetall und daran angepasster Zwischenschicht, der beispielsweise für hochbelastete Anwendungen als Lagerschale eines Pleuellagers oder eines Kurbelwellenhauptlagers in einem Verbrennungsmotor, insbesondere in einem aufgeladenen Dieselaggregat sehr gut geeignet ist.

Die Erfinder haben festgestellt, dass sich aufgrund des Gießverfahrens intermetallische Phasen, insbesondere AlNiMn, aber auch AlCu- und andere NiMn-Ausscheidungen, in der Lagermetallschicht ausbilden, die als Hartteilchen neben der Weichphase Zinn und den Mikrolegierungselementen V, optional Zr und Ti in der Aluminiummatrix feinverteilt vorliegen. Die Gestalt der Hartteilchen ändert sich nach dem Gießen durch die anschließende Wärmebehandlung nur noch geringfügig, sodass die Teilchengröße und -verteilung in der Matrix vornehmlich durch die Abkühlgeschwindigkeit beim Gießen eingestellt wird, um so die gewünschten Materialeigenschaften, insbesondere die Ermüdungsfestigkeit, zu erzielen. Die Mikrolegierungselemente V, optional Zr und Ti erhöhen die Rekristallisationstemperatur und verhindern das Kornwachstum in dem Material, was bei Anwendungen im erhöhten Temperaturbereich, insbesondere bei Temperaturen im Bereich von 150 bis 200°C, für gleichbleibend gute Materialeigenschaften sorgt. So werden durch die Kombination der erfindungsgemäßen Zusammensetzung einschließlich der Mikrolegierungselemente und der besonderen Verfahrensschritte die Teilchengröße und -verteilung der tribologisch wirksamen Partikel (Hartteilchen und Weichphase) in der Matrix im Hinblick auf hochbelastete Anwendungen optimiert.

Die Erfinder haben erkannt, dass die Lagermetallschicht, insbesondere bei Verwendung einer duktilen Zwischenschicht, durch die spezielle Wahl des Zinngehaltes in Kombination mit angepassten Mikrolegierungselementen deutlich in Richtung erhöhter Ermüdungsfestigkeit ausgelegt werden kann, als dies im Stand der Technik üblich war. Deshalb eignet sich das Lager nicht nur im Hauptlagerbereich, wo im Start-Stopp-Betrieb vermehrt Mischreibungsbedingungen auftreten, unter denen keine (hydrodynamische) Ölschmierung des Lagers gegeben ist, sondern auch als Pleuellagerwerkstoff.

Die Zugabe von Ti verbessert, ungeachtet einer geeigneten Temperaturführung und geeigneter Umformgrade bei der Herstellung des Gleitlagerverbundwerkstoffes, die Gefügestruktur des Matrixmaterials beim Gießprozess. Durch eine exakte Einhaltung des Ti-Gehalts von 0,02 - 0,2 Gew.-%, bevorzugt 0,04 - 0,1 Gew.-%, kann bei den im Hinblick auf die Partikelgrößenverteilung der intermetallischen Phasen angestrebten Abkühlraten des Gießprozesses eine hinreichend feine Korngröße des Al-Matrixmaterials eingestellt werden, die eine hohe Festigkeit bei guten Dehneigenschaften des Matrixwerkstoffes sicherstellt. Die Korngrößenverteilung des Matrixmaterials hat wiederum sowohl Einfluss auf die Verteilung der intermetallischen Phasen als auch auf die Einlagerung der Weichphase, d.h. des unlöslichen Sn entlang der Korngrenzen. Deshalb bedingt der Ti-Gehalt eine möglichst exakte Abstimmung mit dem Anteil des Ni, Mn, Cu und Sn-Gehaltes.

Letzterer liegt erfindungsgemäß in einem Bereich von 6,0 Gew.-% bis 8,0 Gew.-% vor. Genau in diesem Bereich weist das Legierungssystem der Lagermetallschicht die hervorragenden Gleiteigenschaften auf und verfügt aufgrund eines vergleichsweise geringen Gehalts an Zinn als Weichphase über die nötige Festigkeit für höhere Belastungen, die einen Einsatz bei Mischreibungsbedingungen möglich macht.

Kupfergehalte im Bereich von 0,5 - 1,0 Gew.-% werden bevorzugt zulegiert um die Festigkeit der Aluminiummatrix zu steigern, ohne die Dehnung zu stark zu verringern.

Den Cr-Gehalt muss man im Zusammenhang mit dem Cu-Gehalt betrachten. Beide Elemente haben sich in der Aluminiummatrix als besonders wichtig im Hinblick auf die Warmfestigkeit des Werkstoffes herausgestellt. Diese ist bei hochbelasteten Anwendungen stets gefordert. Der Cr-Gehalt von 0,15 bis 0,25 Gew.-% hat sich bei gleichzeitiger Zulegierung von Cu mit einem Gehalt von 0,5 bis 1,0 Gew.-% als günstig erwiesen, um in der Matrix ausreichend festigkeitssteigernde Ausscheidungen zu bilden. Andererseits sollte ein Gehalt von 0,25 Gew.-% Cr und 1,0 Gew.-% Cu nicht überschritten werden, um wiederum die Umformbarkeit nicht negativ zu beeinflussen. Schließlich wirkt sich die Kombination aus Cr und Cu auch dahingehend positiv aus, dass eine Obergrenze des eingesetzten Cu von 1,0 Gew.-% die Kosten senkt und die Recyclingfähigkeit des Materials erhöht.

Das Vanadium wirkt in einem Anteil von 0,1 - 0,3 Gew.-% rekristallisationshemmend, weil es die Rekristallisationstemperatur des Matrixmaterials anhebt. Damit dient Vanadium der Erhöhung der Warmfestigkeit, was im Zusammenspiel mit dem Titan eine leichtere Einstellung einer auf die Weichphase und die intermetallischen Ausscheidungen abgestimmten Korngröße erlaubt.

Zudem bewirkt die Zugabe von Vanadium im Zusammenwirken mit einem relativ geringen Zinngehalt von 6 - 8 Gew.-% eine signifikante Festigkeitssteigerung, insbesondere eine Steigerung der 0,2-%-Streckgrenze R_{p,0,2} auf bevorzugt mehr als 90 MPa und der Zugfestigkeit Rₘ auf bevorzugt mehr als 145 MPa . Die Materialparameter sind bei Raumtemperatur im Zugversuch nach DIN EN ISO 6892-1 ermittelt worden. Das Erstaunliche ist, dass diese signifikante Änderung bereits bei geringfügigen Anteilen von 0,2 Gew.-% Vanadium und einer geringfügigen Verringerung des Zinngrads von beispielsweise 10 Gew.-% auf 7 Gew.-%, also innerhalb eines kleinen Spielraums stattfinden.

Bevorzugt weist die Zwischenschicht des auf Endmaß gewalzten Gleitlagerelementes eine Dicke d₂ von 20 µm bis 50 µm auf.

Die Zwischenschicht weist bevorzugt eine Mikrohärte von 70 HV 0,01 bis 110 HV 0,01 und bevorzugt von 85 HV 0,01 bis 100 HV 0,01 auf.

Die Härteprüfung nach Vickers erfolgt gemäß der europäischen Norm EN 6507-1 an der Zwischenschicht des fertigen (umgeformten) Gleitlagerelementes. Die Prüfspitze (der Eindringkörper) wird hierbei in Ebenenrichtung der Zwischenschicht in diese im Bereich einer präparierten Schnittkante des Gleitlagerelementes eingedrückt. Die Schnittkante wird vorzugsweise durch Schleifen vorbereitet.

Die Härte und Dicke der Zwischenschicht hängen unmittelbar zusammen und erfordern eine funktionale Abstimmung mit zuvor genannten Eigenschaften der Lagermetallschicht. Die Mikrohärte in Verbindung mit der Schichtdicke der Zwischenschicht lassen sich aufgrund der Zusammensetzung der Aluminiumlegierung mit den obligatorischen Bestandteilen 3,5 bis 4,5 Gew.-% Kupfer, 0,1 bis 1,5 Gew.-%, bevorzugt 0,4 % bis 1,0 Gew.-% Mangan, 0,1 bis 1,5 Gew.-%, bevorzugt 0,4 % bis 1,0 Gew.-% Magnesium, den üblichen zulässigen Verunreinigungen und Rest Aluminium, insbesondere aufgrund des hohen Kupferanteils, ohne Einbußen hinsichtlich der Bindungsfestigkeit zu der vorzugsweise aus Stahl bestehenden Stützschicht einstellen. Das Einstellen geschieht vor allem durch den Walzplattiervorgang.

Wahlweise weist die Aluminiumlegierung der Zwischenschicht 0,1 % bis 1,0 Gew.-%, bevorzugt 0,2 % bis 0,8 Gew,-% Silizium auf.

Das Silizium führt ebenso wie das Mangan und das Magnesium zur Festigkeitssteigerung der Al-Legierung.

Weiterhin bevorzugt weist die Aluminiumlegierung der Zwischenschicht 0,05 % bis 1,0 Gew.-% Eisen, 0,05 bis 0,5 Gew.-% Chrom, 0,05 bis 0,5 Gew.-% Zink auf.

Wahlweise in der Summe 0,05 Gew.-% bis 0,25 Gew.-% Zirconium und Titan, und gegebenenfalls anderen Legierungsbestandteilen, die aber im Einzelnen nicht mehr als 0,1 Gew.-% und in der Summe nicht mehr als 0,25 Gew.-% der Legierung ausmachen.

Besonders bevorzugt, insbesondere bei besonders hoch beanspruchten Lageranwendungen in Verbrennungsmotoren, ist auf der Lagermetallschicht eine Gleitschicht auf Polymerbasis angeordnet.

Die Polymerschicht führt dazu, dass, insbesondere bei hohen Lasten, eine gleichmäßigere Lastverteilung über die gesamte Lagerbreite erfolgt. Durch die elastische und plastische Anpassungsfähigkeit der Polymerschicht kann die Betriebssicherheit des gesamten Lagers nochmals gesteigert werden.

Die Lagermetallschicht weist besonders bevorzugt eine Dicke von 200 µm - 400 µm auf.

Weiterhin bevorzugt weist die Lagermetallschicht eine Brinellhärte von 50 - 60 HBW 1/5/30 auf.

Die Erfindung betrifft ferner ein Gleitlagerelement aus einem Gleitlagerverbundwerkstoff der vorstehend beschriebenen Art, welches insbesondere eine Lagerschale, eine Gleitlagerbuchse oder eine Anlaufscheibe sein kann.

Entsprechend ist ein Aspekt der Erfindung die Verwendung des Gleitlagerverbundwerkstoffes der vorstehend beschriebenen Art für Gleitlagerelemente, insbesondere Gleitlagerschalen, Gleitlagerbuchsen oder Anlaufscheiben.

Weitere Merkmale der Erfindung werden nachführend anhand der Figuren näher erläutert. Es zeigen:
- Fig. 1: einen prinzipiellen Schichtaufbau eines ersten Ausführungsbeispiels des erfindungsgemäßen Gleitlagerverbundwerkstoffes,
- Fig. 2: einen prinzipiellen Schichtaufbau eines zweiten Ausführungsbeispiels des erfindungsgemäßen Gleitlagerverbundwerkstoffes und
- Fig. 3: eine Ausschnittsvergrößerung aus der Lagermetallschicht.

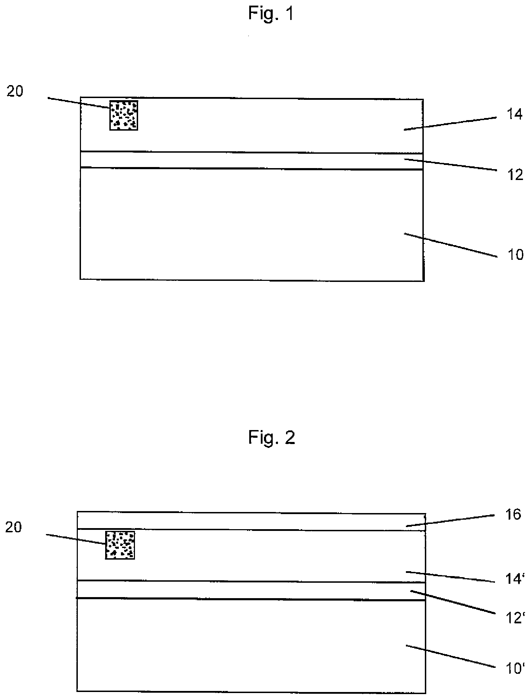

Figur 1 zeigt in schematischer Darstellung einen Querschnitt durch einen Gleitlagerverbundwerkstoff gemäß einem ersten Ausführungsbeispiel der Erfindung. Es weist insgesamt drei Schichten auf. Als untere Schicht ist in Figur 1 eine Stützschicht 10 aus Stahl dargestellt, die aufgrund ihrer Steifigkeit den erforderlichen Presssitz des Lagerelementes gewährleistet. Unmittelbar auf die Stützschicht 10 ist eine Zwischenschicht 12 mit der anspruchsgemäßen Zusammensetzung auf Aluminiumbasis angeordnet. Die Zwischenschicht dient als Haftvermittler zwischen der Stahlschicht 10 und der auf der Zwischenschicht 12 angeordneten Lagermetallschicht 14. Die Lagermetallschicht 14 weist bspw. die folgende Zusammensetzung auf:
6 bis 8 Gew.-% Zinn, 1 bis 3 Gew.-% Nickel, 0,5 - 1 Gew.-% Kupfer, 0,5 - 1 Gew.-% Mangan, 0,2 Gew.-% Vanadium, 0,2 Gew.-% Chrom, 0,2 Gew.-% Zirkonium, Rest Kupfer.

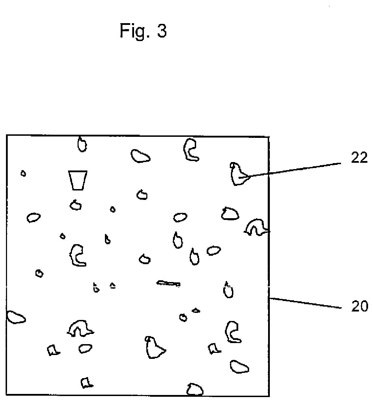

Ferner ist in Figur 1 ein Flächenausschnitt 20 symbolisch dargestellt, der vergrößert die in Figur 3 illustrierte innere Struktur aufweist. Um ein Bild eines solchen Flächenausschnittes anzufertigen, wird vorzugsweise ein ebener Schliff an geeigneter Stelle der Lagermetallschicht präpariert. Abweichend von der Darstellung in Figur 1 kann der Flächenausschnitt auch senkrecht zur Darstellungsebene, z.B. also parallel zur Gleitfläche betrachtet werden.

Die Schichtdicke der Zwischenschicht in dem erfindungsgemäßen Gleitlagerverbundwerkstoff beträgt vorzugsweise 20 µm bis 50 µm.

Die Korngrößenverteilung des Matrixmaterials hat desweiteren einen begünstigenden Einfluss auf die Homogenität der Verteilung der Ni-Mn-Ausscheidungen, insbesondere der Al-Ni-Mn-Ausscheidungen, und der Al-Cu-Ausscheidungen entlang der Korngrenzen der Matrix. Diese intermetallischen Phasen bilden Hartteilchen in dem Gefüge der Lagermetallschicht.

Das zweite Ausführungsbeispiel gemäß Figur 2 weist im Umfang der Stahlstützschicht 10, der Zwischenschicht 12 und der Lagermetallschicht 14 den gleichen Schichtaufbau auf. In Ergänzung ist auf der Lagermetallschicht 14 eine Polymerbeschichtung als Gleitschicht 16 aufgebracht, welche insbesondere in hoch beanspruchten Lageranwendungen vorteilhaft ist.

Anhand der Figur 3 wird im Folgenden die Methode zur Bestimmung der intermetallischen Ausscheidungen in der Lagermetallschicht erläutert. Nachdem zunächst ein ebener Flächenschliff von der Lagermetallschicht präpariert wurde, der beispielsweise senkrecht zur Gleitfläche verläuft, wird unter einem Mikroskop, beispielsweise bei 500-facher Vergrößerung ein Flächenausschnitt 20 der Lagermetallschicht mit einer bestimmten Kantenlänge und -breite ausgewählt und markiert. Sei dieses beispielsweise ein Rechteck mit Kantenlängen von 500 µm und 800 µm, also der Messfläche von 400.000 µm². In diesem Flächenausschnitt erkennt man eine Vielzahl von intermetallischen NiMn-, insbesondere AlNiMn-, und AlCu-Phasen 22, die sich erfahrungsgemäß durch einen bestimmten Grau- oder Farbwertbereich optisch von anderen Einschlüssen, insbesondere von der Weichphase, aber auch von Fremdpartikeln, beides hier nicht dargestellt, und von der Al-Matrix unterscheiden lassen. Die Erfassung solcher Phasen erfolgt vorzugsweise automatisiert in einem elektronischen Bilderfassungssystem.

### Bezugszeichenliste

- 10: Stahlstützschicht
- 12: Zwischenschicht
- 14: Lagermetallschicht
- 16: Polymerbeschichtung/Gleitschicht
- 20: Ausschnitt
- 22: intermetallische Phasen

## Patentansprüche

1. Gleitlagerverbundwerkstoff mit einer Stützschicht (10) aus Stahl, einer Zwischenschicht (12) auf Basis einer bis auf Verunreinigungen bleifreien Aluminiumlegierung und einer Lagermetallschicht (14) auf Basis einer bis auf Verunreinigungen bleifreien Aluminiumlegierung,
wobei die Aluminiumlegierung der Zwischenschicht (12) eine Zusammensetzung mit
3,5 bis 4,5 Gew.-% Kupfer,
0,1 bis 1,5 Gew.-% Mangan,
0,1 bis 1,5 Gew.-% Magnesium,
wahlweise 0,1 % bis 1,0 % Silizium,
wahlweise 0,05 % bis 1,0 % Eisen,
wahlweise 0,05 % bis 0,5 % Chrom,
wahlweise 0,05 % bis 0,5 % Zink,
wahlweise in der Summe 0,05 % bis 0,25 % Zirconium und Titan, wahlweise im Einzelnen nicht mehr als 0,1 Gew.-% und in der Summe nicht mehr als 0,25 Gew.-% anderen Legierungsbestandteilen, den üblichen zulässigen Verunreinigungen und Rest Aluminium aufweist
und wobei die Aluminiumlegierung der Lagermetallschicht (14) eine Zusammensetzung mit
6,0 - 8,0 Gew.-% Zinn,
1,0 - 3,0 Gew.-% Nickel,
0,5 - 1,0 Gew.-% Mangan,
0,5 - 1,0 -Gew.% Kupfer,
0,15 - 0,25 Gew.-% Chrom,
0,1 - 0,3 Gew.-% Vanadium,
wahlweise 0,1 - 0,2 Gew.-% Zirconium,
wahlweise bis 0,2 Gew.-% Titan,
wahlweise weniger als 0,5 Gew.-% sonstiger Elemente,
den üblichen zulässigen Verunreinigungen und
Rest Aluminium aufweist,
wobei "bis auf Verunreinigungen bleifrei" bedeutet, dass der Bleianteil geringer als 0,1 Gew.-% ist.

2. Gleitlagerverbundwerkstoff nach Anspruch 1, **dadurch gekennzeichnet, dass** die Zwischenschicht (12) eine Dicke d2 von 20 µm bis 50 µm aufweist.

3. Gleitlagerverbundwerkstoff nach Anspruch 1 oder 2, **dadurch gekennzeichnet,**
**dass** die Zwischenschicht (12) im Verbund mit der Lagermetallschicht (14) im Walzplattierverfahren bei Plattiertemperaturen < 300°C auf dieStützschicht (10) aufgebracht ist.

4. Gleitlagerverbundwerkstoff nach einem der vorstehenden Ansprüche, **dadurch gekennzeichnet,**
**dass** die Zwischenschicht (12) eine Mikrohärte von 70 HV 0,01 bis 110 HV 0,01 aufweist.

5. Gleitlagerverbundwerkstoff nach einem der vorstehenden Ansprüche, **dadurch gekennzeichnet,**
**dass** die Aluminiumlegierung der Zwischenschicht (12) in Gewichtsprozent aufweist:
| | |
|---|---|
| Mangan | 0,4 % bis 1,0 % |
| Magnesium | 0,4 % bis 1,0 % |
| Silizium | 0,2 % bis 0,8 % |

6. Gleitlagerverbundwerkstoff nach einem der vorstehenden Ansprüche,
**dadurch gekennzeichnet,**
**dass** die Aluminiumlegierung der Lagermetallschicht (14) eine 0,2-%-Streckgrenze R_{p,0,2} von mehr als 90 MPa und eine Zugfestigkeit von mehr als 145 MPa aufweist.

7. Gleitlagerverbundwerkstoff nach einem der vorstehenden Ansprüche,
**dadurch gekennzeichnet,**
**dass** die Lagermetallschicht (14) eine Dicke d von 200 µm bis 400 µm aufweist.

8. Gleitlagerverbundwerkstoff nach einem der vorstehenden Ansprüche,
**dadurch gekennzeichnet,**
**dass** auf der Lagermetallschicht (14) eine Gleitschicht (16) auf Polymerbasis angeordnet ist.

9. Gleitlagerelement aus einem Gleitlagerverbundwerkstoff nach einem der vorstehenden Ansprüche, **dadurch gekennzeichnet,**
**dass** das Gleitlagerelement eine Lagerschale, eine Gleitlagerbuchse oder eine Anlaufscheibe ist.

10. Verwendung des Gleitlagerverbundwerkstoffs nach einem der Ansprüche 1 bis 8 für Gleitlagerelemente, insbesondere Gleitlagerschalen, Gleitlagerbuchsen oder Anlaufscheiben.

## Claims

1. Plain bearing composite material having a support layer (10) of steel, an intermediate layer (12) based on an aluminium alloy which is lead-free with the exception of impurities and a bearing metal layer (14) based on an aluminium alloy which is lead-free with the exception of impurities,
wherein the aluminium alloy of the intermediate layer (12) has a composition with
from 3.5 to 4.5% by weight copper
from 0.1 to 1.5% by weight manganese.
from 0.1 to 1.5% by weight magnesium,
optionally from 0.1% to 1.0% silicon,
optionally from 0.05% to 1.0% iron,
optionally from 0.05% to 0.5% chromium,
optionally from 0.05% to 0.5% zinc,
optionally in total from 0.05% to 0.25% zirconium and
titanium, optionally individually no more than 0.1% by weight and in total no more than 0.25% by weight other alloy components, the usual permissible impurities and balance aluminium,
and wherein the aluminium alloy of the bearing metal layer (14) has a composition with
from 6.0 - 8.0% by weight tin,
from 1.0 - 3.0% by weight nickel,
from 0.5 - 1.0% by weight manganese,
from 0.5 - 1.0% by weight copper,
from 0.15 - 0.25% by weight chromium,
from 0.1 - 0.3% by weight vanadium,
optionally from 0.1 - 0.2% by weight zirconium,
optionally up to 0.2% by weight titanium,
optionally less than 0.5% by weight of other elements,
the remaining permissible impurities and the balance aluminium,
wherein "lead-free with the exception of impurities" means that the lead proportion is less than 0.1% by weight.

2. Plain bearing composite material according to claim 1, **characterised in that** the intermediate layer (12) has a thickness d2 of from 20 µm to 50 µm.

3. Plain bearing composite material according to claim 1 or 2, **characterised in that**
the intermediate layer (12) in combination with the bearing metal layer (14) is applied to the support layer (10) with the roll-bond cladding method at cladding temperatures < 300°C.

4. Plain bearing composite material according to any one of the preceding claims, **characterised in that**
the intermediate layer (12) has a microhardness of 70 HV 0.01 to 110 HV 0.01.

5. Plain bearing composite material according to any one of the preceding claims, **characterised in that**
the aluminium alloy of the intermediate layer (12) has in percentage by weight:
| | |
|---|---|
| manganese | from 0.4% to 1.0%, |
| magnesium | from 0.4% to 1.0%, |
| silicon | from 0.2% to 0.8%. |

6. Plain bearing composite material according to any one of the preceding claims, **characterised in that**
the aluminium alloy of the bearing metal layer (14) has a 0.2% yield strength R_{P0.2} of more than 90 MPa and a tensile strength of more than 145 MPa.

7. Plain bearing composite material according to any one of the preceding claims, **characterised in that**
the bearing metal layer (14) has a thickness d of from 200 µm to 400 µm.

8. Plain bearing composite material according to any one of the preceding claims, **characterised in that**
a sliding layer (16) based on polymer is arranged on the bearing metal layer (14).

9. Plain bearing element of a plain bearing composite material according to any one of the preceding claims,
**characterised in that**
the plain bearing element is a bearing shell, a plain bearing bush or a thrust washer.

10. Use of the plain bearing composite material according to any one of claims 1 to 8 for plain bearing elements, in particular plain bearing shells, plain bearing bushes or thrust washers.

## Revendications

1. Matériau composite pour palier lisse, avec une couche support (10) en acier, une couche intermédiaire (12) à base d'un alliage d'aluminium exempt de plomb à l'exception d'impuretés et une couche (14) de métal antifriction à base d'un alliage d'aluminium exempt de plomb à l'exception d'impuretés, sachant que l'alliage d'aluminium de la couche intermédiaire (12) présente une composition avec
entre 3,5 et 4,5 % en poids de cuivre,
entre 0,1 et 1,5 % en poids de manganèse,
entre 0,1 et 1,5 % en poids de magnésium,
au choix entre 0,1 % et 1,0 % de silicium,
au choix entre 0,05 % et 1,0 % de fer,
au choix entre 0,05 % et 0,5 % de chrome,
au choix entre 0,05 % et 0,5 % de zinc,
au choix entre 0,05 % et 0,25 % au total de zirconium et de titane,
au choix pas plus de 0,1 % en poids individuellement et pas plus de 0,25 % au
total d'autres composants d'alliage,
les impuretés habituelles admissibles et le reste d'aluminium,
et sachant que l'alliage d'aluminium de la couche (14) de métal antifriction présente une composition avec
entre 6,0 et 8,0 % en poids d'étain,
entre 1,0 et 3,0 % en poids de nickel,
entre 0,5 et 1,0 % en poids de manganèse,
entre 0,5 et 1,0 en poids de cuivre,
entre 0,15 et 0,25 % en poids de chrome,
entre 0,1 et 0,3 % en poids de vanadium,
au choix entre 0,1 et 0,2 % en poids de zirconium,
au choix jusqu' 0,2 % en poids de titane,
au choix moins de 0,5 % en poids d'autres éléments,
les impuretés habituelles admissibles et le reste d'aluminium,
sachant que « à l'exception d'impuretés » signifie que la teneur en plomb est inférieure à 0,1 % en poids.

2. Matériau composite pour palier lisse selon la revendication 1, **caractérisé en ce que** la couche intermédiaire (12) présente une épaisseur d2 de 20 µm à 50 µm.

3. Matériau composite pour palier lisse selon la revendication 1 ou 2, **caractérisé en ce que** la couche intermédiaire (12) est appliquée conjointement avec la couche (14) de métal antifriction sur la couche support (10) par le procédé de plaquage par laminage à des températures de plaquage < 300°C.

4. Matériau composite pour palier lisse selon l'une des revendications précédentes, **caractérisé en ce que** la couche intermédiaire (12) présente une microdureté de 70 HV 0,01 à 110 HV 0,01.

5. Matériau composite pour palier lisse selon l'une des revendications précédentes, **caractérisé en ce que** l'alliage d'aluminium de la couche intermédiaire (12) présente, en pourcentages de poids :
| | |
|---|---|
| manganèse | 0,4 % à 1,0 % |
| magnésium | 0,4 % à 1,0 % |
| silicium | 0,2 % à 0,8 %. |

6. Matériau composite pour palier lisse selon l'une des revendications précédentes, **caractérisé en ce que** l'alliage d'aluminium de la couche (14) de métal antifriction présente une limite d'élasticité à 0,2 % R_{p,0,2} supérieure à 90 MPa et une résistance à la traction supérieure à 145 MPa.

7. Matériau composite pour palier lisse selon l'une des revendications précédentes, **caractérisé en ce que** la couche (14) de métal antifriction présente une épaisseur d de 200 µm à 400 µm.

8. Matériau composite pour palier lisse selon l'une des revendications précédentes, **caractérisé en ce qu'**une couche antifriction (16) à base de polymère est disposée sur la couche (14) de métal antifriction.

9. Élément de palier lisse constitué d'un matériau composite pour palier lisse selon l'une des revendications précédentes, **caractérisé en ce que** l'élément de palier lisse est une coquille de palier, un coussinet de palier lisse ou une rondelle de butée.

10. Utilisation du matériau composite pour palier lisse selon l'une des revendications 1 à 8 pour des éléments de palier lisse, en particulier des coquilles de palier lisse, des coussinets de palier lisse ou des rondelles de butée.
